# EUROPÄISCHE PATENTSCHRIFT

(11) **EP 0 379 913 B1**
(45) Veröffentlichungstag und Bekanntmachung des Hinweises auf die Patenterteilung: **09.04.1997**
(21) Anmeldenummer: 90100674.2
(22) Anmeldetag: 13.01.1990
(51) Int. Cl.: C08J 5/18, C08L 23/10, C08K 9/04

(54) **Biaxial orientierte Kunststoffolie**
Biaxially oriented plastics film
Film plastique orienté biaxialement

(30) Priorität: 24.01.1989 DE 3901969
(43) Veröffentlichungstag der Anmeldung: 01.08.1990
(73) Patentinhaber: HOECHST AKTIENGESELLSCHAFT, 65926 Frankfurt am Main (DE)
(72) Erfinder: Schlögl, Gunter, Dr., D-6233 Kelkheim (DE); Murschall, Ursula, Dr., D-6505 Nierstein (DE); Bothe, Lothar, Dr., D-6500 Mainz-Gonsenheim (DE); Crass, Günther, D-6204 Taunusstein 4 (DE)

(56) Entgegenhaltungen:
- EP-A- 194 588
- EP-A- 282 917
- EP-A- 0 212 486
- EP-A- 0 221 659
- DE-A- 3 106 871
- FR-A- 2 346 399
- US-A- 4 791 144
- H.S.Katz et al., "Handbook of Fillers for Plastics", Van Nostrand Reinhold Co., New York 1987, S. 119-142
- Ulmann's Encyclopedia of Industrial Chemistry, 5. Aufl. VCH Weinhaim 1988, S. 101 und 102

## Beschreibung

Die Erfindung bezieht sich auf eine biaxial orientierte Folie auf Basis von Propylenpolymeren, welche Antistatikum und/oder Gleitmittel und ein anorganisches, teilchenförmiges Neutralisationsmittel enthält.

Selbst hochreine Rohstoffe zur Herstellung von Folien dieser Art weisen, bedingt durch das Polymerisationsverfahren, einen Restgehalt an Katalysatorrückständen auf. Solche Katalysatorbestandteile sind insbesondere Verbindungen auf Basis von Aluminium, Titan, Magnesium und Chlor.

Bei der Verwendung des Rohstoffs zur Herstellung von Folien müssen die im Rohstoff enthaltenen aktiven Chlorverbindungen neutralisiert werden. Zur Neutralisation wird in der Praxis den Folienrohstoffen auf Basis von Polypropylen Calciumstearat, Trikaliumcitrat oder Hydrotalcit zugegeben.

Diese Neutralisationsmittel zeigen jedoch den Nachteil, daß die bei der Neutralisation entstehenden Produkte ausdampfen und bei der Folienherstellung und Folienverarbeitung zu unerwünschten Ablagerungen an den Maschinenteilen führen. Diese Ablagerungen können als wachsartige Tropfen auf die Folie herabfallen und dadurch ihre Qualität deutlich verschlechtern. In anderen Fällen wird die Farbqualität der Folie infolge von Vergilbung verringert.

Aufgabe der vorliegenden Erfindunq ist es daher, eine biaxial orientierte Folie auf Basis von Polyolefinen zu schaffen, welche die oben genannten Nachteile vermeidet. Das Ziel der Erfindung besteht somit darin, die Gefahr der Bildung von Wachsflecken auf der Folienoberfläche während der Folienherstellung und Folienverarbeitung auszuschalten.

Die EP-A-0 221 bezieht sich auf eine Polypropylen-Zusammensetzung, die ein Metallsalz einer Fettsäure und Oxide oder Hydroxyde von Erdalkalimetallen enthält. Diese Zusatzstoffe sind jeweils in einer Menge von 0,05 bis 1 Gew.-%, bezogen auf das Gewicht des Polypropylens enthalten. Die PP-Zusammensetzung zeichnet sich durch eine gute thermische Beständigkeit bei der Wiederverwendung von Recyclat aus.

Die US 4,791,144 bezieht sich auf eine mikroporöse Folie aus Propylenhomopolymer, Propylencopolymer oder Blend aus diesen Polymeren. Die mikroporöse Folie hat eine Netzwerkstruktur mit untereinander verbundenen Poren, deren maximale Größe 1 µm und deren mittlere Größe 0,005 - 0,6 µm beträgt. Die Folie hat eine Luftdurchlässigkeit von 5 - 200 s/100 cc. Sie enthält 30 - 70 Gew.-% Füllstoffe.

EP-A-0 282 917 bezieht sich auf eine metallisierbare siegelfreie boPP Mehrschichtfolie, welche in allen Schichten Neutralisationsmittel und einen Stabilisator gegen thermischen Abbau enthält. Das Neutralisationsmittel ist ein Calciumcarbonat mit einer absoluten Teilchengröße kleiner als 10 µm und mit einer spezifischen Oberfläche von größer als 40 m²/g und einem Weißgrad von größer als 90 %.

Die DE 31 06 871 bezieht sich auf eine Polypropylen-Zusammensetzung, die aus kristallinem Polypropylen und Calciumcarbonat besteht. Das Calciumcarbonat ist mit einem geeigneten Dispergiermittel oberflächenbehandelt und hat einen durchschnittlichen Teilchendurchmesser von 0,1 - 0,4 µm.

Nach der Lehre der EP-A-0 330 019 werden als Neutralisationsmittel 0,005 bis 0,5 Gew.-% Carbonatteilchen in einer Folie auf Basis von Propylenpolymeren eingesetzt. Da diese Folie als Elektroisolierfolie vorgesehen ist, ist der Folienrohstoff frei von Gleitmitteln und enthält keine ionogenen Bestandteile. Die resultierende Folie zeigt verbesserte elektrische Eigenschaften und gute Haftung von Metallschichten auf der Folienoberfläche, die Bildung von Wachsflecken auf der Folie unterbleibt.

Wie nun festgestellt wurde, treten bei der Verwendung von Carbonat-Teilchen in Verpackungsfolien und technischen Folien auf Basis von Polyolefinen, die im Gegensatz zu Elektroisolierfolien üblicherweise mit Antistatik- und Gleitmittel-Additiven ausgerüstet sind, deutliche Wirkungsverluste in bezug auf die Gleit- und Antistatikeigenschaften auf.

Es stellt sich deshalb die weitere Aufgabe, eine Folie mit einem Neutralisationsmittel anzugeben, welches nicht zur Bildung von Wachsflecken führt und außerdem die Wirkung der erforderlichen Gleitmittel- und Antistatik-Additive nicht negativ beeinflußt.

Gelöst wird diese Aufgabe durch eine biaxial orientierte Folie auf Basis von Propylenpolymeren, welche Antistatik- und/oder Gleitmitteladditive und ein anorganisches, teilchenförmiges Neutralisationsmittel enthält, dadurch gekennzeichnet, daß das Neutralisationsmittel aus einem Calciumcarbonat und/oder Magnesiumoxid besteht und einen Überzug auf Basis von hydrophoben Verbindungen aufweist und daß das Neutralisationsmittel in einer Menge von 0,005 bis 0,7 Gew.-% enthalten ist. Die abhängigen Ansprüche geben zweckmäßige Weiterbildungen der Folie an.

Überraschenderweise wurde gefunden, daß biaxial orientierte Folien auf Basis von Propylenpolymeren, welche zur Verwendung als Verpackungsfolien oder für technische Anwendungen Antistatik- und/oder Gleitmittel-Additive enthalten, die oben beschriebenen Nachteile nicht aufweisen, wenn die als Neutralisationsmittel eingesetzten Calciumcarbonate und/oder Magnesiumoxide den erfindungsgemäßen Überzug aufweisen. Die Folien zeigen einen niedrigeren Reibungskoeffizienten von kleiner als 0,25 und einen niedrigeren Oberflächenwiderstand von kleiner als 10¹² Ω.

Die Folie besteht aus einem Propylenpolymeren, z.B. einem Propylenhomopolymerisat mit einem hohen isotaktischen Anteil, welcher gewöhnlich größer/gleich 90, insbesondere größer/gleich 95 Gew.-% ist. Der isotaktische Anteil wird dabei aus der Masse des polymeren abzüglich der Masse des n-heptanlöslichen Anteils bestimmt. Ebenfalls erfindungsgemäß ist die Verwendung eines Mischpolymerisats, das zum überwiegenden Anteil aus Propyleneinheiten zusammengesetzt ist. Weitere Einheiten des Propylenmischpolymerisats bestehen aus alpha-Olefinen, insbesondere mit 2 bis 6 C-Atomen.

Geeignete Mischpolymerisate des Propylens sind beispielsweise Blcckcopolymere oder statistische Copolymere des Propylens mit C₂- oder C₄-bis C₈-alpha-Olefinen, insbesondere mit Ethylen. Der Anteil der Propylen-Einheiten im Mischpolymerisat liegt gewöhnlich bei mindestens 80, insbesondere mindestens 90 Gew.-%. Geeignet ist ferner eine Polymermischung, die überwiegend, vorzugsweise zu mindestens 75 Gew.-%, aus isotaktischem Propylenhomopolymerisat und dem Mischpolymerisat und/oder aus anderen Polyolefinen, insbesondere mit 2 bis 6 C-Atomen, besteht. Geeignete Polyolefine in der Polymermischung sind insbesondere HDPE, LDPE, LLDPE und Poly-4-methyl-penten-1, wobei der Anteil dieser Polyolefine jeweils 15 Gew.-%, bezogen auf die Polymermischung, gewöhnlich nicht übersteigt.

Der Propylenpolymere hat zweckmäßig einen Schmelzflußindex von 0,5 g/10 min bis 8,0 g/10 min, insbesondere 1,5 g/10 min bis 4,5 g/10 min, bei 230°C und 2,16 kp Belastung (DIN 53 735).

Der Gehalt an Calciumcarbonat und/oder Magnesiumoxid als anorganisches Neutralisationsmittel hängt vom Chlorgehalt im Rohstoff ab und beträgt im allgemeinen 0,005 bis 0,7 Gew.-%, wobei der Bereich von 0,01 bis 0,4 Gew.-% optimale Ergebnisse liefert. Die absolute Teilchengröße sollte 10, insbesondere 8 Mikrometer nicht übersteigen, da größere Teilchen zur Bildung von Stippen und Blasen, sog. Fischaugen führen, die wegen der darin eingeschlossenen Luft die optischen Eigenschaften der Folie verschlechtern. Es ist besonders vorteilhaft, wenn die absolute Teilchengröße die Foliendicke nicht überschreitet, da sonst diese Teilchen aus der Folienoberfläche herausragen. Aus diesem Grund ist es auch zweckmäßig, die Calciumcarbonat und/oder die Magnesiumoxid-Teilchen mit einem möglichst geringen mittleren Teilchendurchmesser einzusetzen, welcher 0,5, vorzugsweise 0,1, insbesondere 0,07 Mikrometer nicht überschreiten sollte.

Die Calciumcarbonat-Teilchen bestehen z.B. aus natürlichem Gesteinspulver, z.B. aus Kalkspat, Kalkstein oder Kreide, sofern sie nicht durch andere Stoffe zu stark verunreinigt sind.

Vorzugsweise werden jedoch durch Fällung erzeugte Carbonat-Teilchen eingesetzt, welche einen ausreichenden Weißgrad besitzen, so daß eine Vergilbung der Folie mit Sicherheit verhindert wird. Der Weißgrad der Carbonat-Teilchen sollte mindestens 80, vorzugsweise mindestens 90, insbesondere mindestens 95 %, betragen. Er wird gemessen nach DIN 53163. Es ist für eine gute Neutralisationswirkung außerdem zweckmäßig, Carbonat-Teilchen mit einer relativ großen spezifischen Oberfläche zu verwenden. Sie sollte mindestens 40, insbesondere mindestens 80 m²/g, betragen (gemessen nach der BET-Methode).

Gefälltes Calciumcarbonat kann nach verschiedenen Verfahren herstellt werden. Gewöhnlich wird hierzu natürliches Gesteinspulver auf Basis von Calciumcarbonat, insbesondere natürlicher Kalkstein, oberhalb 900°C in Calciumoxid und Kohlendioxid zersetzt. Nach dem Löschen des gebrannten Kalkes mit Wasser wird mit gereinigtem Kohlendioxid carbonisiert. Man erhält die Calciumcarbonat-Teilchen in wäßriger Suspension.

Es ist erfindungswesentlich, daß die anorganischen Teilchen einen Überzug auf Basis von hydrophoben Verbindungen, insbesondere Kohlenwasserstoffketten enthaltenden Verbindungen mit mindestens 8, insbesondere mindestens 14 C-Atomen aufweisen. Hierzu werden diese Verbindungen in emulgierter Form zu den anorganischen Teilchen in wäßriger Suspension gegeben und das Wasser entfernt. Als geeignete Überzugsmaterialien werden insbesondere natürliche oder synthetische Wachse auf Basis von Kohlenwasserstoffen, Säuren, Estern, Seifen oder Säureamiden, Polypropylen-Wachse oder Polyethylen-Wachse, ferner Fettsäuren, vorzugsweise mit 8 bis 30, insbesondere mit 14 bis 24 C-Atomen, ihre Natrium- oder Kaliumsalze oder ihre Alkylester, insbesondere mit 1 bis 18 C-Atomen eingesetzt. Die Fettsäuren, ihre Salze und Ester werden insbesondere aus tierischen oder pflanzlichen Fetten oder Ölen gewonnen, z.B. aus Sojaöl, Palmöl, Kokosnußöl oder Erdnußöl, und liegen folglich als Gemisch verschiedener höherer Fettsäuren vor. Besonders bevorzugt werden Palmitinsäure, Stearinsäure oder Hydroxystearinsäure, ihre Alkalisalze oder Alkylester mit 1 bis 18 C-Atomen, z.B. Methyl-, Butyl- oder Decylstearat eingesetzt. Es ist auch möglich, Gemische dieser Verbindungen als Überzugsmaterial zu verwenden. Als Emulgator können die üblichen ionogenen oder nichtionogenen oberflächenaktiven Mittel eingesetzt werden.

Die Gewichtsmenge des Überzugsmaterials sollte möglichst größer/gleich 10, insbesondere größer/gleich 25 g, bezogen auf 1 kg anorganischer Teilchen, betragen, um Wirkungsverluste der eingesetzten Gleit- und Antistatikmittel zu verhindern.

Als Gleitmittel können Carbonsäureamide, vorzugsweise Fettsäureamide mit 14 bis 22 C-Atomen, insbesondere Stearinsäureamid oder Erucasäureamid, in einer Konzentration von 0,3 bis 0,4 Gew.-%, bezogen auf die Folie, eingesetzt werden.

Als Gleitmittel können ebenfalls Polydiorganosiloxane oder deren Mischungen eingesetzt werden. Ihre bei 25°C gemessene Viskosität sollte mindestens 100 mm²/s betragen. Die zweckmäßige Konzentration liegt bei 0,1 bis 1,5 Gew.-% Polydiorganosiloxan, bezogen auf die Folie.

Beispiele für geeignete Polydiorganosiloxane sind Polydialkylsiloxane, Polyalkylphenylsiloxane, olefinmodifizierte Silikonöle, polyethermodifizierte Silikonöle, epoxymodifizierte Silikonöle und alkoholmodifizierte Silikonöle. Polydialkylsiloxane mit 1 bis 4 C-Atomen in der Alkylgruppe sind bevorzugt.

Als geeignete Antistatika haben sich tertiäre Amine, wie N,N-Bis-(2-hydroxyethyl)-alkylamin (Alkyl = C₁₄-C₂₈), erwiesen, die in einer Konzentration von 0,02 bis 0,3 Gew.-%, bezogen auf die Folie, eingesetzt werden.

Als Antioxydantien kommen üblicherweise sterisch gehinderte Phenole, Thioether, Phosphite und Phosphonite in Frage. Eine umfassende Zusammenstellung von Stabilisatoren für Propylenpolymere wird von T.J. Henman in der Publikation "World Index of Polyolefine Stabilizers", Kogan Page Ltd., London, 1982, gegeben. Geeignete Verbindungen werden insbesondere in der EP-A-0 222 296 beschrieben. Diese Verbindungen werden gewöhnlich in einer Menge bis zu 1, insbesondere bis zu 0,5 Gew.-% in der Folie eingesetzt.

Eine erfindungsgemäße Folie kann als Monofolie oder als coextrudierte Mehrschichtfolie hergestellt werden, wobei sie auf einer oder beiden Oberflächen eine Deckschicht, z.B. aus heißsiegelfähigem Material, aufweist. Es ist auch möglich, die coextrudierte Folie aus mehreren Schichten von gleichen oder verschiedenen Propylenpolymeren herzustellen, wobei die anorganischen Teilchen der Erfindung in allen Schichten gleichmäßig verteilt sind.

Zur Herstellung der erfindungsgemäßen Folie wird die Schmelze aus einer Breitschlitzdüse bei einer Extrusionstemperatur von 260°C bis 290°C extrudiert bzw. coextrudiert, die erhaltene Folie durch Abkühlen verfestigt, anschließend bei einer Temperatur von 120°C bis 150°C im Verhältnis 5:1 bis 7:1 längsgestreckt und bei einer Temperatur von 160°C bis 180°C im Verhältnis 8:1 bis 10:1 quergestreckt. Zuletzt wird die biaxial gestreckte Folie bei 140°C bis 160°C thermofixiert.

Die Folie zeigt gewöhnlich eine Dicke von 8 bis 50, insbesondere 15 bis 50 Mikrometer. Gegebenenfalls vorhandene heißsiegelfähige Deckschichten zeigen eine übliche Dicke von kleiner als 3, insbesondere kleiner als 1 Mikrometer.

Die Folie wird eingesetzt als technische Folie, z.B. als Trägerfolie für Klebebänder, als Trennfolie bei der Herstellung dekorativer Schichtstoffplatten oder als Kaschierfolie.

Ganz besonders vorteilhaft wird sie als Verpackungfolie verwendet, wobei sie auf schnellaufenden Verpackungsmaschinen problemlos eingesetzt werden kann. Sie zeigt einen deutlich niedrigeren Reibungskoeffizienten und Oberflächenwiderstand im Vergleich zu einer Folie mit anorganischen Teilchen, die den hydrophoben Überzug nicht aufweisen.

Die Erfindung wird anhand der nachfolgenden Beispiele näher erläutert.

Die in den Beispielen und Vergleichsbeispielen beschriebenen Folien sind Mehrschichtfolien mit einer Dicke von jeweils 20 Mikrometer und Monofolien mit einer Dicke von jeweils 10 Mikrometer.

### Beispiele

Mit Hilfe des Coextrusionsverfahrens werden jeweils aus einer Breitschlitzdüse bei einer Extrusionstemperatur von 275°C 1 mm dicke Mehrschichtfolien extrudiert. Sie bestehen aus einer Basisschicht aus Polypropylen und beidseitigen Oberflächenschichten aus einem C₂/C₃-Copolymeren.

Diese Folien werden nach Durchlaufen einer Luftstrecke auf einer Kühlwalze abgeschreckt, nach Erwärmung auf 130°C um das 5-fache in Längsrichtung und anschließend bei 175°C Lufttemperatur um das 10-fache in Querrichtung verstreckt. Abschließend wird die Folie bei 150°C thermofixiert.

Die Basisschicht dieser Mehrschichtfolien zeigt eine Dicke von ca. 19 Mikrometer, auf jeder Seite ist eine Siegelschicht mit einer Dicke von 0,5 bis 0,8 Mikrometer vorhanden.

Als Rohstoff für die Basisschicht wurde ein Propylenhomopolymerisat mit einem isotaktischen Anteil von 96,5 %, einem Stabilisatorgehalt von 0,1 % 1,3,5-Trimethyl-2,4,6-tris (3,5-di-tert.butyl-4-hydroxybenzyl)-benzol und einer antistatischen Ausrüstung von 0,13 % N,NBis-(2-hydroxyethyl)-alkylamin, Alkyl gleich C₁₄ bis C₁₈ eingesetzt.

Die Siegelschichten bestanden aus einem statistischen Copolymeren aus Ethylen und Propylen mit einem Ethylengehalt von 4,5 Gew.-%, bezogen auf die Menge des Copolymeren und mit 0,8 Gew.-%, bezogen auf die Siegelschicht, an Polydimethylsiloxan einer kinematischen Viskosität von 30000 mm²/s bei 25°C.

Es wurden insgesamt 8 Folien mit Stearinsäure-gecoatetem Calciumcarbonat-Teilchen als Neutralisationsmittel in den Konzentrationen von 0,02 bis 0,3 Gew.-%, bezogen auf das Gesamtgewicht der Folie, hergestellt. Der mittlere Teilchendurchmesser betrug 0,02 Mikrometer, die spezifische Oberfläche der Teilchen betrug 80 m²/g, ihr Weißgrad 95 %. Die Überzugsmenge an Stearinsäure betrug 29 g je kg Carbonatteilchen.

### Vergleichsbeispiele

1. Wie im vorstehenden Beispiel werden insgesamt 8 Folien allerdings mit nicht oberflächenbeschichtetem Calciumcarbonat-Teilchen als Neutralisationsmittel in den Konzentrationen von 0,02 bis 0,3 Gew.-%, bezogen auf die Folie, hergestellt.
2. In analoger Weise werden insgesamt 8 Folien mit Calciumstearat als Neutralisationsmittel in den Konzentrationen von 0,02 bis 0,3 Gew.-%, bezogen auf die Folie, hergestellt.

Die im ersten Beispiel hergestellten erfindungsgemäßen Folien sind völlig frei von Wachsflecken und zeigen sehr gute antistatische Wirkung und hervorragende Gleiteigenschaften. Die nach dem ersten Vergleichsbeispiel erhaltenen Folien sind zwar ebenfalls frei von Wachsflecken, zeigen jedoch völlig unzureichende antistatische Eigenschaften und neigen beim Durchlaufen von Verpackungsmaschinen zum Blocken, so daß der Verpackungsablauf gestört wird. Letzteren Mangel zeigen die Folien des Vergleichsbeispiel 2 zwar nicht, jedoch sind sie aufgrund von Wachsflecken als Verpackungsfolien ungeeignet.

Durch den Überzug aus Stearinsäure auf den Carbonatteilchen wird überraschenderweise die für die Gleiteigenschaften der Folie offensichtlich negative Wechselwirkung zwischen den Carbonatteilchen und dem Gleitmittel bzw. Antistatikum ausgeschaltet.

Es hat sich ferner gezeigt, daß die mit dem Überzug versehenen Carbonatteilchen besser dispergierbar und in der Kunststoffschmelze besser homogenisierbar sind, während unbeschichtete Carbonatteilchen dagegen zur Agglomeratbildung neigen.

## Patentansprüche

1. Biaxial orientierte Folie auf Basis von Propylenpolymeren, welche Antistatik- und/oder Gleitmitteladditive und ein anorganisches, teilchenförmiges Neutralisationsmittel enthält, dadurch gekennzeichnet, daß das Neutralisationsmittel aus einem Calciumcarbonat und/oder Magnesiumoxid besteht und einen Überzug auf Basis von hydrophoben Verbindungen aufweist und daß das Neutralisationsmittel in einer Menge von 0,005 bis 0,7 Gew.-% enthalten ist.

2. Folie nach Anspruch 1, dadurch gekennzeichnet, daß sie 0,01 bis 0,4 Gew.-% des Neutralisationsmittels enthält.

3. Folie nach Anspruch 1 oder 2, dadurch gekennzeichnet, daß die hydrophoben Verbindungen solche mit Kohlenwasserstoffketten mit mindestens 8 C-Atomen sind.

4. Folie nach Anspruch 3, dadurch gekennzeichnet, daß die Kohlenwasserstoffkette mindestens 14 C-Atomen aufweist.

5. Folie nach einem der Ansprüche 1 bis 4, dadurch gekennzeichnet, daß der mittlere Teilchendurchmesser kleiner/gleich 0,5 Mikrometer ist.

6. Folie nach Anspruch 5, dadurch gekennzeichnet, daß der mittlere Teilchendurchmesser kleiner/gleich 0,1 µm ist.

7. Folie nach einem der Ansprüche 1 bis 6, dadurch gekennzeichnet, daß die spezifische Oberfläche, gemessen nach der BET-Methode, der Teilchen größer/gleich 40 m²/g ist.

8. Folie nach Anspruch 7, dadurch gekennzeichnet, daß die spezifische Oberfläche der Teilchen (gemessen nach der BET-Methode) größer/gleich 80 m²/g ist.

9. Folie nach einem der Ansprüche 1 bis 8, dadurch gekennzeichnet, daß der Weißgrad der Teilchen (gemessen nach DIN 53 163) größer/gleich 80% ist.

10. Folie nach Anspruch 9, dadurch gekennzeichnet, daß der Weißgrad größer/gleich 95% ist.

11. Folie nach einem der Ansprüche 1 bis 10, dadurch gekennzeichnet, daß die Überzugsmenge mindestens 1Og je kg der in der Folie vorhandenen Teilchen beträgt.

12. Folie nach einem der Ansprüche 1 bis 11, dadurch gekennzeichnet, daß der Überzug Wachse, Fettsäuren, ihre Alkalisalze und/oder ihre Alkylester mit 1 bis 18 C-Atomen oder ein Gemisch dieser Verbindungen enthält.

13. Folie nach einem der Ansprüche 1 bis 12, dadurch gekennzeichnet, daß sie auf mindestens einer ihrer Oberflächen eine heißsiegelfähige Schicht, aufweist.

14. Folie nach einem der Ansprüche 1 bis 13, dadurch gekennzeichnet, daß sie 0,02 bis 0,3 Gew.-% tertiäres Amin mit einer C₁₄-C₂₈-Alkylgruppe und 0,1 bis 1,5 Gew.-% Gleitmittel, enthält.

15. Verfahren zur Herstellung einer Folie nach Anspruch 1 bei welchem die Polymer-Schmelze aus einer Breitschlitzdüse bei einer Extrusionstemperatur von 260-290°C extrudiert bzw. coextrudiert, die erhaltene Folie durch Abkühlen verfestigt, anschließend bei einer Temperatur von 120-150°C im Verhältnis 5:1 bis 7:1 längsgestreckt und bei einer Temperatur von 160-180°C im Verhältnis 8:1 bis 10:1 quergestreckt und die biaxial gestreckte Folie bei 140-160°C thermofixiert wird.

16. Verwendung einer Folie gemäß Anspruch 1 als Trägerfolie für Klebebänder, als Trennfolie bei der Herstellung dekorativer Schichtstoffplatten, als Kaschierfolie oder als Verpackungsfolie.

## Claims

1. A biaxially oriented film based on propylene polymers and containing antistatic and/or lubricant additives and an inorganic, particulate neutralizer, wherein the neutralizer comprises a calcium carbonate and/or magnesium oxide and has a coating based on hydrophobic compounds, and wherein the neutralizer is present in an amount of from 0.005 to 0.7% by weight.

2. A film as claimed in claim 1, which contains from 0.01 to 0.4% by weight of the neutralizer.

3. A film as claimed in claim 1 or 2, wherein the hydrophobic compounds contain hydrocarbon chains having at least 8 carbon atoms.

4. A film as claimed in claim 3, wherein the hydrocarbon chain has at least 14 carbon atoms.

5. A film as claimed in any one of claims 1 to 4, wherein the mean particle diameter is less than or equal to 0.5 micron.

6. A film as claimed in claim 5, wherein the mean particle diameter is less than or equal to 0.1 µm.

7. A film as claimed in any one of claims 1 to 6, wherein the specific surface area, measured by the BET method, of the particles is greater than or equal to 40m²/g.

8. A film as claimed in claim 7, wherein the specific surface area of the particles (measured by the BET method) is greater than or equal to 80 m²/g.

9. A film as claimed in any one of claims 1 to 8, wherein the whiteness of the particles (measured in accordance with DIN 53 163) is greater than or equal to 80%.

10. A film as claimed in claim 1, wherein the whiteness is greater than or equal to 95%.

11. A film as claimed in any one of claims 1 to 10, wherein the amount of coating is at least 10 g per kg of particles present in the film.

12. A film as claimed in any one of claims 1 to 11, wherein the coating contains waxes, fatty acids, alkaline metal salts thereof and/or alkyl esters thereof having 1 to 18 carbon atoms, or a mixture of these compounds.

13. A film as claimed in any one of claims 1 to 12, which has a heat-sealable layer on at least one of its surfaces.

14. A film as claimed in any one of claims 1 to 13, which contains from 0.02 to 0.3% by weight of tertiary amine containing a C₁₄-C₂₈-alkyl group and from 0.1 to 1.5% by weight of lubricant.

15. A process for the production of a film as claimed in claim 1, in which the polymer melt is extruded or coextruded from a flat-film die at an extrusion temperature of 260-290°C, the resultant film is solidified by cooling, subsequently stretched longitudinally in a ratio of from 5:1 to 7:1 at a temperature of 120-150°C and stretched transversely in a ratio of from 8:1 to 10:1 at a temperature of 160-180°C, and the biaxially stretched film is heat-set at 140-160°C.

16. The use of a film as claimed in claim 1 as a base film for adhesive tapes, as a release film in the production of decorative sandwich panels, as a lamination film or as a packaging film.

## Revendications

1. Feuille à orientation biaxiale à base de polymères du propylène, qui contient des additifs antistatiques et/ou lubrifiants et un agent de neutralisation minéral particulaire, caractérisée en ce que l'agent de neutralisation est constitué d'un carbonate de calcium et/ou d'un oxyde de magnésium et comporte un revêtement à base de composés hydrophobes, et que l'agent de neutralisation est présent en une quantité de 0,005 à 0,7 % en poids.

2. Feuille selon la revendication 1, caractérisée en ce qu'elle contient de 0,01 à 0,4 % en poids de l'agent de neutralisation.

3. Feuille selon la revendication 1 ou 2, caractérisée en ce que les composés hydrophobes possèdent des chaînes hydrocarbonées ayant au moins 8 atomes de carbone.

4. Feuille selon la revendication 3, caractérisée en ce que la chaîne hydrocarbonée a au moins 14 atomes de carbone.

5. Feuille selon l'une des revendications 1 à 4, caractérisée en ce que la granulométrie moyenne est inférieure ou égale à 0,5 micromètre.

6. Feuille selon la revendication 5, caractérisée en ce que la granulométrie moyenne est inférieure ou égale à 0,1 µm.

7. Feuille selon l'une des revendications 1 à 6, caractérisée en ce que l'aire spécifique des particules, mesurée par la méthode BET, est supérieure ou égale à 40 m²/g.

8. Feuille selon la revendication 7, caractérisée en ce que l'aire spécifique des particules, mesurée par la méthode BET, est supérieure ou égale à 80 m²/g.

9. Feuille selon l'une des revendications 1 à 8, caractérisée en ce que le degré de blancheur des particules, mesuré selon DIN 53 163, est supérieur ou égal à 80 %.

10. Feuille selon la revendication 9, caractérisée en ce que le degré de blancheur est supérieur ou égal à 95 %.

11. Feuille selon l'une des revendications 1 à 10, caractérisée en ce que la quantité de revêtement est d'au moins 10 g/kg des particules présentes dans la feuille.

12. Feuille selon l'une des revendications 1 à 11, caractérisée en ce que le revêtement contient des cires, des acides gras, leurs sels de métaux alcalins et/ou leurs esters alkyliques ayant de 1 à 18 atomes de carbone, ou un mélange de ces composés.

13. Feuille selon l'une des revendications 1 à 12, caractérisée en ce qu'elle comporte une couche thermoscellable au moins sur l'une de ses faces.

14. Feuille selon l'une des revendications 1 à 13, caractérisée en ce qu'elle contient de 0,02 à 0,3 % en poids d'une amine tertiaire ayant un groupe alkyle en C₁₄-C₂₈ et de 0,1 à 1,5 % en poids d'un lubrifiant.

15. Procédé de fabrication d'une feuille selon la revendication 1, dans laquelle la masse fondue est extrudée ou co-extrudée par une filière plate à une température d'extrusion de 260 à 290°C, la feuille obtenue est solidifiée par refroidissement, puis est soumise à un étirage longitudinal à une température de 120 à 150°C selon un rapport de 5:1 à 7:1 et à un étirage transversal à une température de 160 à 180°C selon un rapport de 8:1 à 10:1, la feuille ayant subi l'étirage biaxial étant thermofixée à une température de 140 à 160°C.

16. Utilisation d'une feuille selon la revendication 1 comme feuille support pour rubans adhésifs, comme feuille de séparation lors de la fabrication de plaques stratifiées décoratives, comme feuille de doublage ou comme feuille d'emballage.
